(19) Europäisches Patentamt
European Patent Office
Office européen des brevets

(11) Veröffentlichungsnummer: **0 003 990**
**B1**

(12) # EUROPÄISCHE PATENTSCHRIFT

(45) Veröffentlichungstag der Patentschrift: **27.01.82**

(51) Int. Cl.³: **C 08 L 81/06**

(21) Anmeldenummer: **79100492.2**

(22) Anmeldetag: **20.02.79**

(54) **Polyarylsulfone mit verbesserter Beständigkeit gegen Spannungsrisskorrosion.**

(30) Priorität: **10.03.78 DE 2810462**

(43) Veröffentlichungstag der Anmeldung: **19.09.79 Patentblatt 79/19**

(45) Bekanntmachung des Hinweises auf die Patenterteilung: **27.01.82 Patentblatt 82/4**

(84) Benannte Vertragsstaaten: **BE DE FR GB IT NL**

(56) Entgegenhaltungen:
**CH-A-463 777**
**DE-A-2 336 097**
**FR-A-1 493 933**
**FR-A-2 331 602**
**GB-A-2 000 720**
**US-A-4 021 395**
**US-A-2 474 350**

(73) Patentinhaber: **BAYER AG, Zentralbereich Patente, Marken und Lizenzen, D-5090 Leverkusen 1, Bayerwerk (DE)**

(72) Erfinder: **Binsack, Rudolf, Dr., Bethelstrasse 4a, D-4150 Krefeld (DE)**
Erfinder: **Wank, Joachim, Ing.grad., Zülpicher Strasse 7, D-4047 Dormagen (DE)**
Erfinder: **Reese, Eckart, Dr., Aggerstrasse 22, D-4047 Dormagen-1 (DE)**

**EP 0 003 990 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Polyarylsulfone mit verbesserter Beständigkeit gegen Spannungsrißkorrosion

Gegenstand der vorliegenden Erfindung ist ein Verfahren zur Einarbeitung von Ammoniumsalzen oder Alkalisalzen oder Erdalkalisalzen organischer monomerer Sulfonsäuren in Polyarylsulfone mit $\bar{M}w$ zwischen 10 000 und 60 000 in Mengen zwischen etwa 0,01 und 5 Gew.-%, bezogen auf Gesamtgewicht Polyarylsulfon + Sulfonsäuresalz, das dadurch gekennzeichnet ist, daß man Polyarylsulfongranulat mit den entsprechenden Mengen an Sulfonsäuresalz mischt, das Gemisch in einer Ein- oder Zweiwellenschnecke aufschmilzt und homogenisiert, oder das Sulfonat unmittelbar zur Schmelze des Polyarylsulfons zudosiert entweder in reiner Form oder in Form eines Konzentrates im Polyarylsulfon.

Gegenstand der vorliegenden Erfindung sind außerdem Mischungen aus Polyarylsulfonen mit $\bar{M}w$ zwischen 10 000 und 60 000 und etwa 0,01 bis 5 Gew.-%, bezogen auf Gesamtgewicht Polyarylsulfon + Sulfonsäuresalz, Ammoniumsalze oder Alkalisalze oder Erdalkalisalze organischer monomerer Sulfonsäuren erhalten gemäß dem erfindungsgemäßen Verfahren.

Gegenstand der vorliegenden Erfindung sind außerdem Mischungen aus Polyarylsulfonen mit $\bar{M}w$ zwischen 10 000 und 60 000 und etwa 0,01 bis 5 Gew.-%, bezogen auf Gesamtgewicht Polyarylsulfon + Sulfonsäuresalz, Ammoniumsalze oder Alkalisalze oder Erdalkalisalze organischer monomerer Sulfonsäuren, die außer der Sulfonatgruppe noch Halogensubstituenten enthalten.

Polyarylsulfone sind eine bekannte Klasse von thermoplastischen Kunststoffen und vielseitig verwendbar (siehe beispielsweise Society of Plastics Engineers, 33rd Annual Technical Conference, May 5–8, 1975, Seiten 621 bis 623).

Der Einsatz der Polyarylsulfone für bestimmte technische Anwendungen wird durch die Belastungsversprödung der Polyarylsulfone sowie die Spannungsrißanfälligkeit der Polyarylsulfone gegenüber Lösungsmitteleinflüssen und gegenüber Einwirkungen von Lösungen ungesättigter Polyesterharze eingeschränkt oder sogar unterbunden.

Gemäß DE-OS 1 719 244 bzw. gemäß US-PS 3 365 517 wird vorgeschlagen, die unerwünschte Belastungsversprödung von Polysulfonen durch den Zusatz von Polymeren, beispielsweise von Polycarbonaten zu mindern.

Gegenstand der vorliegenden Erfindung ist außerdem die Verwendung von Ammoniumsalzen oder Alkalisalzen oder Erdalkalisalzen organischer monomerer Sulfonsäuren, die außer der Sulfonatgruppe noch Halogensubstituenten enthalten, zur Modifizierung von Polyarylsulfonen mit $\bar{M}w$ zwischen 10 000 und 60 000 in Mengen von etwa 0,01 bis 5 Gew.-%, bezogen auf Gesamtgewicht Polyarylsulfon + Sulfonsäuresalz.

Gemäß DE-OS 2 305 413 (Le A 14 799) bzw. US-PS 3 960 815 wird die Spannungsrißanfälligkeit von Polyaryläthersulfonen durch Verzweigung der Polymerkette verbessert.

Gegenüber diesen bekannten Problemlösungen werden die eingangs erwähnten Nachteile der Polyarylsulfone in anderer Weise, einfacher und außerdem umfassender gemäß vorliegender Erfindung dadurch gelöst, daß man den Polyarylsulfonen Ammoniumsalze oder Alkalisalze oder Erdalkalisalze organischer monomerer Sulfonsäuren in Mengen von etwa 0,01 Gew.-% bis 5 Gew.-%, bezogen auf Gesamtgewicht Polyarylsulfon und Sulfonsäuresalz zusetzt.

Polyarylsulfone im Sinne der vorliegenden Erfindung sind polymere Verbindungen, die zwischen je zwei Aryl-Kernen ein $-SO_2$-Bindeglied besitzen. Sie sollen ein $\bar{M}w$ (Gewichtsmittelmolekulargewicht gemessen beispielsweise mittels Lichtstreuung) von etwa 10 000 bis etwa 60 000, vorzugsweise von etwa 15 000 bis etwa 50 000, und insbesondere von etwa 20 000 bis etwa 40 000, haben.

Die Arylkerne können einkernig, zweikernig, dreikernig oder auch vierkernig sein, wobei die Kerne via Anellierung, Einfachbindung oder Brückenglieder verbunden sein können und vorzugsweise zwischen 6 und 24, insbesondere zwischen 6 und 12 und ganz besonders 6 C-Atome enthalten. Die Arylkerne können zusätzliche Substituenten tragen, wie beispielsweise $C_1-C_6$-Alkyl, Chlor oder Brom.

Die erfindungsgemäß verwendbaren Polyarylsulfone können sowohl linear als auch verzweigt sein, sie können allein oder im Gemisch eingesetzt werden.

Erfindungsgemäß verwendbare Polyarylsulfone sind beispielsweise in den folgenden Literaturstellen beschrieben:

DE-AS 1 520 131 (ICI),
DE-AS 1 720 648 bzw.
US-PS 3 532 670 (Le A 10 711) und
DE-OS 2 305 413 bzw.
US-PS 3 960 815 (Le A 14 799).

Die erfindungsgemäß verwendbaren Polyarylsulfone können vorzugsweise durch folgende Formeleinheit charakterisiert werden

$$(-Ar-SO_2-Ar-B-)_p \qquad (I)$$

worin Ar die oben erwähnten Aryl-Kerne sind, $-B-$ entweder eine Einfachbindung oder ebenfalls $-SO_2-$ oder ein beliebiges Brückenglied der Polymerkette darstellt und »p« der Polymerisationsgrad ist, der durch die jeweiligen Gewichtsmittelmolekulargewichte $\overline{M}w$ innerhalb der oben genannten Bereiche bestimmt wird.

Als Ar kann beispielsweise p-Phenylen, m-Phenylen, Biphenylen, Oxibiphenylen. Naphthylen oder ein zweibindiger Rest der folgenden Formel (II)

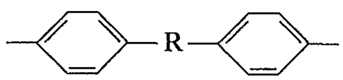
(II)

sein, worin R ein $C_1-C_{12}$-Alkylen, $C_2-C_{12}$-Alkylieden, $C_5-C_{12}$-Cycloalkylen, $C_5-C_{12}$-Cycloalkyliden, $C_7-C_{12}$-Aralkylen, $C_7-C_{12}$-Aralkyliden, ein $C_8-C_{12}$-Arylen-bis-alkyliden-Rest oder die Gruppierung $-O-$, $-S-$, $-SO-$, $-CO-$ oder $-SO_2-$ ist.

Die Herstellung der erfindungsgemäß verwendbaren Polyarylsulfone kann nach den bekannten Herstellungsverfahren für Polyarylsulfone erfolgen. Einzelheiten dazu sind der Fachliteratur sowie den oben zitierten Literaturstellen zu entnehmen.

Die Art und Struktur der erfindungsgemäß verwendbaren Ammonium- oder Alkalisalze oder Erdalkalisalze organischer monomerer Sulfonsäuren sind prinzipiell nicht limitiert, richtet sich jedoch bezüglich Wirkung im zu modifizierenden Polyarylsulfon und bezüglich Verträglichkeit mit dem zu modifizierenden Polyarylsulfon nach dem im Einzelfall gewünschten Eigenschaftsbild der zu modifizierenden Polyarylsulfone, welches wiederum von dem im Einzelfall vorgesehenen Verwendungszweck der zu modifizierenden Polyarylsulfone bestimmt wird.

Von den Ammoniumsalzen organischer Sulfonsäuren sind besonders die $NH_4^+$-Salze und Tetra-($C_1-C_{18}$-alkyl)-ammoniumsalze geeignet.

Als Alkalisalze kommen beispielsweise die des Lithiums, Natriums, Kaliums, Rubidiums und Caesiums in Frage, als Erdalkalisalze kommen beispielsweise die des Berylliums, Magnesiums, Calciums, Strontiums und Bariums in Frage.

Als erfindungsgemäß verwendbare Ammoniumsalze kommen die des Kations der folgenden Formel $[NR^1R^2R^3R^4]^+$ in Frage, worin $R^1$, $R^2$, $R^3$ und $R^4$ Wasserstoff, gleiche oder verschiedene $C_1-C_{18}$-Alkyle, gleiche oder verschiedene $C_7-C_{20}$-Aralkyle, und gleiche oder verschiedene $C_5-C_{20}$-Cycloalkyle sein können.

Für die erfindungsgemäß verwendbaren Ammonium- und Metallsalze sind als organische Sulfonsäuren monomere Sulfonsäuren geeignet, die sowohl eine als auch mehrere Sulfonsäuregruppen enthalten können, also beispielsweise Monosulfonsäuren, Disulfonsäuren, Trisulfonsäuren, Tetrasulfonsäuren etc.

Die organischen Sulfonsäuren können aliphatisch, cycloaliphatisch, araliphatisch und aromatisch sein; sie können eine beliebige Zahl an C-Atomen enthalten.

Die organischen Sulfonsäuren können unsubstituiert oder substituiert sein, wobei hinsichtlich der Art und Zahl der Substituenten keine Einschränkung gegegen ist, da Sulfonsäuresalze sowohl mit Substituenten 1. wie 2. Ordnung, sowie mit elektronegativ wie elektropositiv wirkenden Substituenten erfindungsgemäß wirksam sind.

Derartige Sulfonsäuren sowie Salze davon sind beispielsweise in den folgenden deutschen Offenlegungsschriften beschrieben:

DE-OS 1 930 257 (Le A 12 278),
DE-OS 2 253 072 (Le A 14 721) und
DE-OS 2 149 311 (Le A 13 999).

Erfindungsgemäß geeignete Sulfonsäuresalze sind beispielsweise solche von $C_1-C_{20}$-Alkyl-Sulfonsäuren, $C_6-C_{24}$-Aryl-Sulfonsäuren, $C_6-C_{15}$-Cycloalkyl-Sulfonsäuren sowie $C_7-C_{24}$-Aralkyl-Sulfonsäuren. Geeignet sind auch Sulfonsäuren, die einen oder mehrere Heterocyclen enthalten.

Besonders wirksame Sulfonsäuresalze sind solche, die außer der Sulfonatgruppe andere elektronegative Substituenten enthalten.

(Bezüglich Definition der elektronegativen Substituenten siehe E. S. GOULD, Mechanismus und Struktur in der organischen Chemie, Verlag Chemie, Weinheim, 1962, S. 240 ff.)

Besonders geeignete elektronegative Substituenten sind Halogensubstituenten, wie beispielsweise Chlor, Brom, und insbesondere sind Fluorsubstituenten als elektronegative Substituenten an den monomeren Sulfonsäuren geeignet.

Besonders geeignet sind Salze organischer aliphatischer Halogensulfonsäuren der allgemeinen Formel

$R-SO_3H$

in der

R für $C_nH_mHal_{(2n+1)-m}$ mit Hal = F, Cl, Br
n für eine ganze Zahl von 1 bis 20 und
m für eine ganze Zahl von 0 bis 2n.

sind.

Weiterhin sind besonders geeignet Salze von monomeren aromatischen Sulfonsäuren der allgemeinen Formel

$$[Ar(SO_3H)_y]_p$$

in der

Ar ein Arylrest mit 1 bis 4 aromatischen Ringen ist, die vorzugsweise noch Halogensubstituenten enthalten können,
y eine ganze Zahl, vorzugsweise 1 oder 2 ist, und
p 1 beträgt.

Erfindungsgemäß geeignete Salze sind beispielsweise die Ammonium-, Alkali- und Erdalkalisalze der folgenden Sulfonsäuren:

Perfluormethansulfonsäure,
Perfluorbutansulfonsäure,
Perfluoroctansulfonsäure,
Eicosandisulfonsäure,
Naphthalin-2,6-disulfonsäure,
Naphthalin-1,5-disulfonsäure,
4,4'-Dichlor-1,1'-dinaphthyl-sulfon-5,5'-disulfonsäure,
3,3', 4,4'-Tetrachlorbenzil-5-sulfonsäure,
2,5-Dibromthiophen-3-sulfonsäure,
4,4'-Dichlordiphenylsulfid-3-sulfonsäure,
Tetrachlordiphenyläther-disulfonsäure,
2,3,4,5,6-Pentachlor-betastyrol-sulfonsäure,
[Pentachlorphenylbenzoat]-3-sulfonsäure,
3,5,6-Trichlor-4-phthalat-sulfonsäure,
1', 3'-Bis[1,4,5,6,7,7-hexachlor-bicyclo(2,2,1)-hept-5-en-endo-2-yl]-benzolsulfonsäure,
2,4,5-Trichlorbenzol-sulfonanilid-4'-sulfonsäure,
3-(Trifluormethyl)-5-brombenzolsulfonsäure,
3-Chlorbenzolsulfonsäure,
Oxibisphenyl-4,4'-disulfonsäure,
2-Naphthol-6-sulfonsäure,
2-Naphthol-6,8-disulfonsäure,
3-Carboxy-benzolsulfonsäure,
4,4'-Diamino-stilben-2,2'-disulfonsäure,
4-Chlorbenzolsulfonsäure,
2,5-Dichlorbenzolsulfonsäure.

Besonders geeignet sind die Natriumsalze und Kaliumsalze der vorstehend genannten Sulfonsäuren.

Geeignete Salze sind beispielsweise

3-Chlorbenzol-natriumsulfonat,
Naphthalin-1,5-di-natriumdisulfonat,
Oxibisphenyl-4,4'-di-kalium-disulfonat,
2-Naphthol-6-natriumsulfonat,
2-Naphthol-6,8-di-kalium-disulfonat,
Di-natriumsalz der 3-Carboxy-benzol-sulfonsäure,
4,4'-Diamino-stilben-2,2'-di-natrium-disulfonat,
4-Chlor-benzol-natriumsulfonat,
2,5-Dichlor-benzol-natriumsulfonat und
Perfluorbutan-kaliumsulfonat.

Die erfindungsgemäß verwendbaren Salze der monomeren organischen Sulfonsäuren sind nach bekannten Methoden aus den entsprechenden Sulfonsäuren herstellbar.

Die Menge an erfindungsgemäß verwendbaren Sulfonsäuresalzen kann zwischen etwa 0,01 Gew.-% und 5 Gew.-%, bezogen auf Polyarylsulfon + Sulfonsäuresalz, je nach gewünschtem Eigenschaftsbild und Verwendungszweck variieren. Die Mindestmenge an Sulfonaten wird durch ein Minimum an Wirksamkeit der Sulfonate in den Polyarylsulfonen, die Maximalmenge an Sulfonaten durch die Vermeidung von Nebenreaktionen der Sulfonate in den Polyarylsulfonen bzw. durch Verhinderung des Auftretens von elektrolytischer Kontaktkorrosion bestimmt.

Die erfindungsgemäß verwendbaren Sulfonsäuresalze können sowohl allein als auch als Gemische eingesetzt werden.

Die Einarbeitung der erfindungsgemäß verwendbaren Sulfonsäuresalze in die Polyarylsulfone erfolgt nach bekannten Verfahren, indem man beispielsweise Polyarylsulfongranulat mit den entsprechenden Mengen an Sulfonsäuresalz mischt, das Gemisch in einer Ein- oder Zweiwellenschnecke aufschmilzt und homogenisiert. Die Zudosierung des Sulfonats kann auch unmittelbar zur Schmelze des Polyarylsulfons erfolgen, und zwar entweder in reiner Form oder in Form eines Konzentrates im Polyarylsulfon (Masterbatch-Methode).

Die Schmelze der erfindungsgemäßen Gemische kann nach üblichen Methoden als Strang ausgepreßt und granuliert werden. Sie kann auch über ein entsprechendes Profilwerkzeug direkt zu Formkörpern extrudiert werden.

Aus der US-Patentschrift 4 021 395 sind wäßrige Dispersionen auf Basis von Polyarylsulfonen beschrieben; als anionische oberflächenaktive Substanzen sind unter anderem Alkyl-arylsulfonate, sulfonierte Ester und Ether sowie Alkylsulfonate geeignet. Halogenierte Sulfonate sind als oberflächenaktive Substanzen nicht in US-PS 4 021 395 beschrieben. Die Dispersionen dienen als Beschichtungen für die verschiedensten Substrate. Homogene Mischungen im Sinne vorliegender Erfindung werden nicht erhalten.

Die erfindungsgemäßen Gemische aus Polyarylsulfonen und Salzen organischer Sulfonsäuren können je nach Verwendungszweck zu Extrusionsformkörpern oder Spritzgußartikeln auf den bekannten Verarbeitungsmaschinen nach bekannten Methoden verformt werden. Besondere Anwendungsgebiete sind Behälter, Rohre, Platten und Folien.

Den erfindungsgemäßen Gemischen aus Polyarylsulfonen und Salzen organischer Sulfonsäuren können Zusatzstoffe der üblichen Art vor, während oder nach dem Vermischen der Komponenten zugesetzt werden.

Erwähnt seien in diesem Zusammenhang beispielsweise Farbstoffe, Pigmente, Entformungsmittel, Stabilisatoren gegen Feuchtigkeits-, Hitze- und UV-Einwirkung, Gleitmittel, Füllstoffe, wie Glaspulver oder Glaskugeln, Quarzerzeugnisse, Graphit, Molybdänsulfid, Metallpulver, Pulver höherschmelzender Kunststoffe, z. B. Polytetrafluoräthylenpulver, natürliche Fasern, wie Baumwolle, Sisal und Asbest, ferner Glasfasern der verschiedensten Art, Metallfäden sowie während des Verweilens in der Schmelze der Polyarylsulfone stabile und die Polyarylsulfone nicht merklich schädigende Fasern.

Die folgenden Beispiele sollen den Gegenstand der vorliegenden Erfindung illustrieren:

## Beispiel 1

Ein verzweigtes Polyarylsulfon, hergestellt durch Umsetzung von 0,25 Mol 2,2-Bis-(4-hydroxyphenyl)-propan, 0,0025 Mol 2,6-Bis-(2′-hydroxy-5′-methyl-benzyl)-4-methylphenol und 0,25375 Mol 4,4′-Dichlordiphenylsulfon, mit einem $\overline{M}w$ von 30 000, wurde mit 0,52 Gew.-% Natriumsalz der 2,5-Dichlorbenzolsulfonsäure bepudert und auf einem Zweiwellenextruder aufgeschmolzen. Die Schmelze wurde bei etwa 340°C homogenisiert und als Strang in ein Wasserbad gepreßt. Der erkaltete Strang wurde granuliert und nach dem Trocknen erneut in einem Einwellenextruder mit Entgasungszone bei ca. 290°C aufgeschmolzen.

Die Schmelze wurde über eine Breitschlitzdüse ausgedrückt und über eine Chillrollanlage zu ca. 40 µm dicken Folien abgezogen. Die erhaltenen Eigenschaftswerte sind in nachfolgender Tabelle aufgeführt.

## Beispiel 2

ist das Vergleichsbeispiel mit reiner Polyarylsulfonfolie entsprechender Dicke.

## Beispiele 3 bis 13

Ein lineares Polyarylsulfon, hergestellt durch Polykondensation von 4,4′-Dichlordiphenylsulfon und Bis-2-(4-hydroxy-phenyl)-propan, mit einem $\overline{M}w$ von 20 000, wurde gem. Beispiel 1 mit verschiedenen Sulfonsäuresalzen aufgeschmolzen und zu Folien verarbeitet.

Nachfolgende Tabelle enthält die gemessenen Eigenschaften.

Als Vergleich dient eine Folie aus reinem verzweigten Polyarylsulfon.

| Beispiel | Sulfonsäuresalz Typ | % | Mechanische Eigenschaften der Folie: Zugfestigkeit in MPA[1]) Ausgangsfolie | Zugfestigkeit in MPA[1]) Folie nach Lagerung[2]) | Reißdehnung In %[1]) Ausgangsfolie | Reißdehnung In %[1]) Folie nach Lagerung[2]) |
|---|---|---|---|---|---|---|
| 1 | 2,5-Dichlorbenzolsulfonsäure, Na-Salz | 0,52 | 70 | 70 | 90 | 20 |
| 2 | – | – | 70 | 58 | 90 | 10 |
| 3 | Perfluorbutansulfonsäure, K-Salz | 0,70 | 70 | 70 | 100 | 50 |
| 4 | 3-Chlorbenzolsulfonsäure, Na-Salz | 0,44 | 73 | 65 | 100 | 30 |
| 5 | Naphthalin-1,5-disulfonsäure, $Na_2$-Salz | 0,34 | 70 | 63 | 50 | 10 |
| 6 | Oxibisphenyl-4,4'-disulfonsäure, $K_2$-Salz | 0,42 | 70 | 65 | 50 | 10 |
| 7 | 2-Naphthol-6-sulfonsäure, Na-Salz | 0,51 | 70 | 65 | 50 | 20 |
| 8 | 2-Naphthol-6,8-disulfonsäure, $K_2$-Salz | 0,39 | 70 | 65 | 60 | 20 |
| 9 | 3-Carboxy-benzolsulfonsäure, $Na_2$-Salz | 0,51 | 65 | 60 | 50 | 20 |
| 10 | 4,4'-Diaminostilben-2,2'-disulfonsäure, $Na_2$-Salz | 0,43 | 70 | 70 | 80 | 20 |
| 11 | 4-Chlorbenzolsulfonsäure, Na-Salz | 0,44 | 75 | 65 | 100 | 30 |
| 12 | 2,5-Dichlorbenzolsulfonsäure, Na-Salz | 0,52 | 70 | 65 | 80 | 50 |
| 13 | – | – | 75 | 40 | 100 | 4 |

[1]) Nach DIN 53 455.
[2]) Nach 10 sec Lagerung in Toluol/n-Propanol 1 : 3.

**Patentansprüche**

**1. Verfahren zur Einarbeitung von Ammoniumsalzen oder Alkalisalzen oder Erdalkalisalzen organischer monomerer Sulfonsäuren in Polyarylsulfone mit $\overline{M}w$ zwischen 10 000 und 60 000 in Mengen zwischen etwa 0,01 und 5 Gew.-%, bezogen auf Gesamtgewicht Polyarylsulfon + Sulfonsäuresalz, dadurch gekennzeichnet, daß man Polyarylsulfongranulat mit den entsprechenden Mengen an Sulfonsäuresalz mischt, das Gemisch in einer Ein- oder Zweiwellenschnecke aufschmilzt und homogenisiert, oder das Sulfonat unmittelbar zur Schmelze des Polyarylsulfons zudosiert entweder in reiner Form oder in Form eines Konzentrates im Polyarylsulfon.**

**2. Mischungen aus Polyarylsulfonen mit $\overline{M}w$ zwischen 10 000 und 60 000 und etwa 0,01 bis 5 Gew.-%, bezogen auf Gesamtgewicht Polyarylsulfon + Sulfonsäuresalz, Ammoniumsalze oder Alkalisalze oder Erdalkalisalze organischer monomerer Sulfonsäuren erhalten gemäß Verfahren des Anspruchs 1.**

**3. Mischungen aus Polyarylsulfonen mit $\overline{M}w$ zwischen 10 000 und 60 000 und etwa 0,01 bis 5 Gew.-%, bezogen auf Gesamtgewicht Polyarylsulfon + Sulfonsäuresalz, Ammoniumsalze oder Alkalisalze oder**

Erdalkalisalze organischer monomerer Sulfonsäuren, die außer der Sulfonatgruppe noch Halogensubstituenten enthalten.

4. Verwendung von Ammoniumsalzen oder Alkalisalzen oder Erdalkalisalzen organischer monomerer Sulfonsäuren, die außer der Sulfonatgruppe noch Halogensubstituenten enthalten, zur Modifizierung von Polyarylsulfonen mit $\overline{M}w$ zwischen 10 000 und 60 000 in Mengen von etwa 0,01 bis 5 Gew.-%, bezogen auf Gesamtgewicht Polyarylsulfon + Sulfonsäuresalz.

**Claims**

1. Process for incorporating ammonium salts or alkali metal salts or alkaline earth metal salts of organic monomeric sulphonic acids into polyaryl sulphones with $\overline{M}w$ between 10,000 and 60,000 in amounts of between about 0.01 and 5% by weight, relative to the total weight of polyaryl sulphone-sulphonic acid salt, characterised in that polyaryl sulphone granules are mixed with the appropriate amounts of sulphonic acid salt and the mixture is melted in a single- or twin-screw machine and homogenised, or the sulphonate is metered directly into the melt of the polyaryl sulphone, either in the pure form or in the form of a concentrate in the polyaryl sulphone.

2. Mixtures of polyaryl sulphones with $\overline{M}w$ between 10,000 and 60,000 and approximately 0.01 to 5% by weight, relative to the total weight of polyaryl sulphone + sulphonic acid salt, of ammonium salts or alkali metal salts or alkaline earth metal salts of organic monomeric sulphonic acids, which are obtained according to the process of Claim 1.

3. Mixtures of polyaryl sulphones with $\overline{M}w$ between 10,000 and 60,000 and about 0.01 to 5% by weight, relative to the total weight of polyaryl sulphone + sulphonic acid salt, of ammonium salts or alkali metal salts or alkaline earth metal salts of organic monomeric sulphonic acids, which also contain halogen substituents, in addition to the sulphonate group.

4. Use of ammonium salts or alkali metal salts or alkaline earth metal salts of organic monomeric sulphonic acids which also contain halogen substituents, in addition to the sulphonate group, for the modification of polyaryl sulphones with $\overline{M}w$ between 10,000 and 60,000 in amounts of about 0.01 to 5% by weight, relative to the total weight of polyaryl sulphone + sulphonic acid salt.

**Revendications**

1. Procédé pour incorporer des sels d'ammonium ou des sels de métaux alcalins ou des sels de métaux alcalino-terreux d'acides sulfoniques monomériques organiques dans des polyarylsulfones de $\overline{M}p$ compris entre 10 000 et 60 000 en quantités comprises entre environ 0,01 et 5% en poids, par rapport au poids total polyarylsulfone + sel d'acide sulfonique, caractérisé en ce qu'on mélange un granulé de polyarylsulfone avec les quantités correspondantes de sel d'acide sulfonique, on fait fondre le mélange et on l'homogénéise dans une vis sans fin simple ou double, ou bien on ajoute le sulfonate directement à la masse fondue de polyarylsulfone sous la forme pure ou sous la forme d'un concentré dans la polyarylsulfone.

2. Des mélanges de polyarylsulfones de valeur $\overline{M}p$ comprise entre 10 000 et 60 000 et contenant environ 0,01 à 5% en poids, par rapport au poids total polyarylsulfone + sel d'acide sulfonique, de sels d'ammonium ou de sels de métaux alcalins ou de sels de métaux alcalino-terreux d'acides sulfoniques monomériques organiques, obtenus conformément au procédé de la revendication 1.

3. Des mélanges de polyarylsulfones de valeur $\overline{M}p$ comprise entre 10 000 et 60 000 et contenant environ 0,01 à 5% en poids, par rapport au mélange total polyarylsulfone + sel d'acide sulfonique, de sels d'ammonium ou de sels de métaux alcalins ou de sels de métaux alcalino-terreux d'acides sulfoniques monomériques organiques, qui contiennent des substituants halogéno en plus du groupe sulfonate.

4. Utilisation de sels d'ammonium ou de sels de métaux alcalins ou de sels de métaux alcalino-terreux d'acides sulfoniques monomériques organiques, qui contiennent des substituants halogéno en plus du groupe sulfonate, pour la modification de polyarylsulfones de valeur $\overline{M}p$ comprise entre 10 000 et 60 000, en quantités d'environ 0,01 à 5% en poids, par rapport au poids total polyarylsulfone + sel d'acide sulfonique.